# EUROPÄISCHE PATENTSCHRIFT

(11) **EP 0 487 493 B1**
(45) Veröffentlichungstag und Bekanntmachung des Hinweises auf die Patenterteilung: **03.08.1994**
(21) Anmeldenummer: 91890278.4
(22) Anmeldetag: 13.11.1991
(51) Int. Cl.: B67B 7/02, B01L 3/14

(54) **Vorrichtung zur automatischen Entfernung des Verschlussstopfens von Gefässen**
Device for automatic removal of stoppers from vessels
Dispositif automatique pour enlever des bouchons pour récipients

(30) Priorität: 20.11.1990 AT 2355/90
(43) Veröffentlichungstag der Anmeldung: 27.05.1992
(73) Patentinhaber: ART BICKFORD & CO. GESELLSCHAFT M.B.H., 2700 Wiener Neustadt (AT)
(72) Erfinder: Lacher, Johann, A-2380 Perchtoldsdorf (AT)
(74) Vertreter: Wildhack, Helmut, Dipl.-Ing. Dr.

(56) Entgegenhaltungen:
- DE-A- 3 141 780
- US-A- 4 217 798

## Beschreibung

Die Erfindung bezieht sich auf eine Vorrichtung zur automatischen Entfernung des Verschlußstopfens von Gefäßen, insbesondere von Probengefäßen für medizinische oder technische Tests, welche Gefäße, vorzugsweise zu mehreren, in Gefäßträgern angeordnet sind und nacheinander vom Verschlußstopfen befreit werden, wobei ein in den Verschlußstopfen einstechender Dorn mittels eines im Gestell der Vorrichtung befindlichen Antriebes auf den Verschlußstopfen zu bewegt, anschließend der Verschlußstopfen mittels des Dornes vom Gefäß gelöst und schließlich vom Dorn abgestreift wird, und wobei im Gestell eine Führung zur Bewegung einer den Dorn tragenden Stange vorgesehen ist.

Auf zahlreichen Gebieten werden Proben in großer Anzahl für Untersuchungen verwendet, wobei sich jede Probe in einem Probengefäß befindet, zumeist in einem unten geschlossenen und oben durch den abnehmbaren Verschlußstopfen verschlossenen Glasröhrchen. Beispiele für solche Anwendungsgebiete sind Reihenuntersuchungen von Materialien aller Art, vor allem aber medizinische bzw. klinische Labortests. In der Regel besteht der Verschlußstopfen aus einem in das obere, offene Ende des Glasröhrchens eingedrückten Stoppel, zumeist aus Gummi, Kunststoff oder Kork. Die bei Reihenuntersuchungen geforderten hohen Leistungen lassen eine händische Entfernung eines solchen Verschlußstopfens nicht zu, zumal bei händischer Betätigung stets die Gefahr besteht, daß das Probengefäß, insbesondere wenn es aus Glas besteht, zu Bruch geht oder daß bei unachtsamer Handhabung des Probengefäßes zumindest ein Teil seines Inhaltes verschüttet wird, was bei aggressiven, toxischen oder mit Keimen behafteten Proben bedenklich ist. Es wurde daher bereits eine Vorrichtung der eingangs geschilderten Art zur automatischen Entfernung des Verschlußstopfens von Glasprobenröhrchen vorgeschlagen (DE-A 3 141 780), bei welcher die Röhrchen in in Gefäßträgern angeordneten Gruppen der Vorrichtung zugeführt werden, welche Gefäßträger zumeist tellerartig oder rackartig ausgebildet sind, wobei jedoch auch Sonderformen in Gebrauch sind. Die Gefäßträger werden in die Vorrichtung der Reihe nach eingesetzt und an den Bauteilen der Vorrichtung, welche den Verschlußstopfen entfernen, schrittweise vorbeigeführt, wobei ein Probengefäß nach dem anderen vom Verschlußstopfen befreit wird. Dies geschieht durch den Dorn, welcher an einem Gestänge befestigt ist, das mittels einer Nockenscheibe so bewegt wird, daß der Dorn von außen, d.h. mit zum Gerät gerichteter Spitze, gegen den Verschlußstopfen geführt und in den Verschlußstopfen eingedrückt wird. Sodann erfolgt eine Anhebung des Verschlußstopfens mittels des Dornes und schließlich das Abstreifen des Verschlußstopfens vom Dorn mittels eines am Gestänge schwenkbar gelagerten Abstreifers, der bei der Weiterbewegung des Gestänges zur Anlage an einem Anschlag kommt.

Beobachtungen haben gezeigt, daß verhältnismäßig häufig Verunreinigungen der im Gefäßträger befindlichen Nachbargefäße durch unbeabsichtigt aus dem Gefäß bei der Entfernung des Verschlußstopfens austretendes Probengut stattfindet. Dies ist nicht nur nachteilig im Hinblick auf die gebotene Sauberkeit, sondern bildet auch eine eminente Gefahr der Probenverfälschung bzw. einer Kontaminierung der Nachbarproben, wenn aus einem Probengefäß eine Teilmenge der Probe in ein anderes Probengefäß gelangt und sich mit der dort befindlichen Probe vermischt. Diese Gefahr ist umso bedeutender, als diese Querinfektion später nicht mehr feststellbar ist. Untersuchungen der Anmelderin haben zur Erkenntnis geführt, daß eine Hauptursache dafür darin zu sehen ist, daß der Verschlußstopfen beim Auftreffen des Dornes schiefgestellt wird, auch wenn die Gefäßachse exakt vertikal gehalten wird. Diese Schiefstellung führt dazu, daß an jener Seite, an welcher der Verschlußstopfen höher liegt, ein Probenaustritt bei Vorliegen ungünstiger Bedingungen erfolgt, z.B. beim Vorhandensein eines Über- oder Unterdruckes im betreffenden Probengefäß, bei unruhigem Probenmaterial, z.B. als Folge von vorangehenden Erschütterungen, usw. Bei der bekannten Vorrichtung liegt die erwähnte, höher gelegene Stelle des Verschlußstopfens beim Öffnungsvorgang an jener Seite des Probengefäßes, welche von der Vorrichtung abgewendet und somit den Nachbarproben zugewendet ist, insbesondere dann, wenn die Probengefäße nicht in einer normal zur Bewegungsrichtung des Dornes gerichteten Reihe an der Vorrichtung vorbeigeführt werden, also z.B. im Falle der Verwendung von Drehtellern als Gefäßträger.

Ausgehend von dieser Erkenntnis des Erfinders setzt sich die Erfindung zur Aufgabe, die geschilderten Nachteile zu vermeiden und eine Vorrichtung der eingangs geschilderten Art so zu verbessern, daß die Gefahr der Kontamination benachbarter Proben praktisch ausgeschaltet ist. Die Erfindung löst diese Aufgabe dadurch, daß der Dorn am einen Stirnende der Stange mit vom anderen Stirnende der Stange weggerichteter Spitze befestigt ist und daß der Antrieb und die Führung die Stange beim Einstechen vom Gestell der Vorrichtung weg auf den Verschlußstopfen zu bewegen, so daß der Dorn in den Verschlußstopfen von der Seite des Gestelles her einsticht. Auf diese Weise wird beim Einstechvorgang des Dornes der Verschlußstopfen an jener Seite zuerst angehoben, welche der Vorrichtung benachbart ist, so daß dann, wenn es zu einem unbeabsichtigten Austritt von Probengut aus dem Probengefäß kommt, dieses Probengut gegen die Vorrichtung zu und somit von den benachbarten Probengefäßen weg aus dem betreffenden Probengefäß austritt. Zwar kommt es dann immer noch zu einer Verschmutzung der Vorrichtung, was jedoch in der Regel bemerkt wird und durch geeignete Fühler sofort gemeldet werden kann. Die erwähnte Austrittsrichtung des Probengutes sichert aber, daß dieses unbeabsichtigt austretende Probengut nicht in die Nachbargefäße gelangen kann. Außerdem ergibt sich im Vergleich zur eingangs beschriebenen bekannten Vorrichtung der Vorteil einer Platzeinsparung, gemessen in Längsrichtung der Stange, da bei der bekannten Vorrichtung die den Dorn tragende Stange mit ihrem Vorderende über den Verschlußstopfen hinausbewegt werden muß, bevor der eigentliche Einstechvorgang beginnen kann. Eine so weite Verschiebung der Stange im Bereich jener Seite des Gefäßträgers, welche dem Gestell der Vorrichtung abgewendet ist, ist aber nicht immer und überall problemlos möglich, z.B. nicht bei sehr eng einander im Gefäßträger benachbarten Gefäßen. Beim Erfindungsgegenstand hingegen reduziert sich die Vorschubbewegung der Stange auf jene Distanz, welche sich aus dem Eindringen des Dornes in den Verschlußstopfen von der Gestellseite her ergibt.

Gemäß einer bevorzugten Ausführungsform der Erfindung ist die Stange an einer im Gestell vorgesehenen Kulisse der Führung geführt und mit ihrem den Dorn tragenden Stirnende aus dem Gestell durch den Antrieb gegen den Gefäßträger zu herausbewegbar. Die Stange und der von ihr getragene Dorn befinden sich daher im Ruhezustand, z.B. bei Nichtgebrauch der Vorrichtung, innerhalb des Gestelles und sind daher durch dieses geschützt. Dadurch wird auch das Laborpersonal geschützt, da ja bei der erfindungsgemäßen Vorrichtung der Dorn nach vorne von der Stange absteht und daher - wenn er bei Nichtgebrauch der Vorrichtung aus dem Gehäuse herausragen würde - eine Gefahrenquelle bilden würde.

Die Erfindung bietet aber auch die Möglichkeit, die Anordnung und Funktionsweise des Abstreifers zu verbessern. Gemäß der Erfindung ist hiebei an dem den Dorn tragenden Stirnende der Stange ein Abstreifer für das Abziehen des Verschlußstopfens vom Dorn längsverschieblich gelagert, welcher beim Abstreifvorgang vorzugsweise entgegen der Wirkung einer Feder, relativ zur Stange durch einen ortsfesten Anschlag vom Stirnende der Stange weg zur Spitze des Dornes zu verschoben wird. Während bei der bekannten Vorrichtung ein schwenkbar am Gestänge gelagerter Abstreifer zur Wirkung kommt, ist bei der erfindungsgemäßen Anordnung der Abstreifer an seiner Stange längsverschieblich gelagert, was einen längeren Wirkungsweg des Abstreifers und somit eine erhöhte Sicherheit ergibt. Die erwähnte Anordnung des Abstreifers ergibt auch die Möglichkeit, im Rahmen der Erfindung den Abstreifer mit einer über den Dorn vorragenden Verlängerung zu versehen, welche beim Einstechvorgang mit einer stirnseitigen Abschrägung auf die Deckfläche des Verschlußstopfens aufgleitet. Damit wird ein automatischer Höhenausgleich erzielt, welcher im Falle ungleich hoher Probengefäße sicherstellt, daß der Dorn immer im gleichen Abstand, gemessen von der Deckfläche des Verschlußstopfens nach unten, auf den Verschlußstopfen trifft. Außerdem bewirkt diese Verlängerung beim Aufgleiten auf den Verschlußstopfen bereits eine leichte Schrägstellung des Verschlußstopfens, bevor noch der Dorn in den Verschlußstopfen einzudringen beginnt. Diese Schrägstellung ist vor allem auf eine Materialverlagerung in Richtung der Bewegung des Dornes zurückzuführen, da ja der Verschlußstopfen aus zumindest einigermaßen elastischem Material, in der Regel aus Gummi, Kunststoff oder Kork, besteht.

Gemäß einer Weiterbildung der Erfindung weist die Kulisse, an der die Stange mit zumindest einer Rolle geführt ist, im Anschluß an jene Stelle, an welcher die Rolle beim Einstechen des Dornes liegt, einen schräg nach oben, gegen den Gefäßträger zu geneigten Führungsabschnitt auf, wobei die Stange mit ihrem Antrieb über ein Gelenk verbunden ist. Auf diese Weise ergibt sich nach dem Einstechvorgang ein Hochschwenken der Stange, was eine Herausziehung des Verschlußstopfens aus dem Verschlußgefäß bewirkt. An diesen nach oben geneigten Führungsabschnitt kann sich im Rahmen der Erfindung ein weiterer, oberer Führungsabschnitt der Kulisse anschließen, wobei das die Stange mit ihrem Antrieb verbindende Gelenk mit einer Arretierung versehen ist, welche die Stange bei der Rückzugbewegung in Anlage an diesem oberen Führungsabschnitt hält. Diese Arretierung vermeidet, daß die Führungsrolle vom oberen Führungsabschnitt nach unten abfällt. Gemäß einer Weiterbildung der Erfindung kann hiebei der Anschlag für den Abstreifer im Bereich des vom Gefäßträger entfernten Ende des oberen Führungsabschnittes vorgesehen sein, wobei die Abstreifstelle im Gestell liegt. Dies ergibt die Möglichkeit, den Verschlußstopfen im Gestell vom Dorn zu lösen und innerhalb des Gestelles abzuführen, was aus hygienischen Gründen günstiger ist als die Vorgangsweise gemäß der bekannten Vorrichtung, bei welcher der Verschlußstopfen außerhalb des Gehäuses der Vorrichtung vom Dorn abgestreift wird.

Um eine einwandfreie Abstimmung der Bewegung der den Dorn tragenden Stange auf die vom Gefäßträger zur Vorrichtung transportierten Probengefäße zu erzielen und Leerbewegungen der Stange zu vermeiden, falls Probengefäße ohne Verschlußstopfen zur Vorrichtung gelangen, ist im Rahmen der Erfindung an einer dem Dorn benachbarten Stelle des Gestelles an der dem Gefäßträger zugewendeten Seite desselben ein Sensor für das Vorhandensein eines Verschlußstopfens, vorzugsweise ein Infrarotsensor, angeordnet, der mit der elektrischen Anspeisung des Antriebes des Dornes, vorzugsweise mit einem Stoppschalter gekoppelt ist.

Weitere Kennzeichen und Vorteile der Erfindung ergeben sich aus der Beschreibung eines Ausführungsbeispieles, welches in der Zeichnung schematisch dargestellt ist. Fig.1 zeigt die Vorrichtung bei eingezogenem Dorn, mit zwei unterschiedlichen Gefäßträgern, nämlich einem Drehteller und einem Rack, beide im vom Grundgestell der Vorrichtung getrennten Zustand. Fig.2 zeigt einen an das Grundgestell der Vorrichtung angeschlossenen Drehteller mit Probengefäßen, vor Beginn des Stopfenentfernungsvorganges. Fig.3 zeigt in Seitenansicht den Anschluß eines den Gefäßträger tragenden Gestelles an die Vorrichtung. Die Fig.4,5 und 6 zeigen drei aufeinanderfolgende Phasen des Stopfenentfernungsvorganges, und zwar Fig.4 (in größerem Maßstab) für den Stopfen eines in einem Rack gehaltenen Probengefäßes, die Fig.5 und 6 in Anwendung für den Stopfen eines von einem Drehteller gehaltenen Probengefäßes.

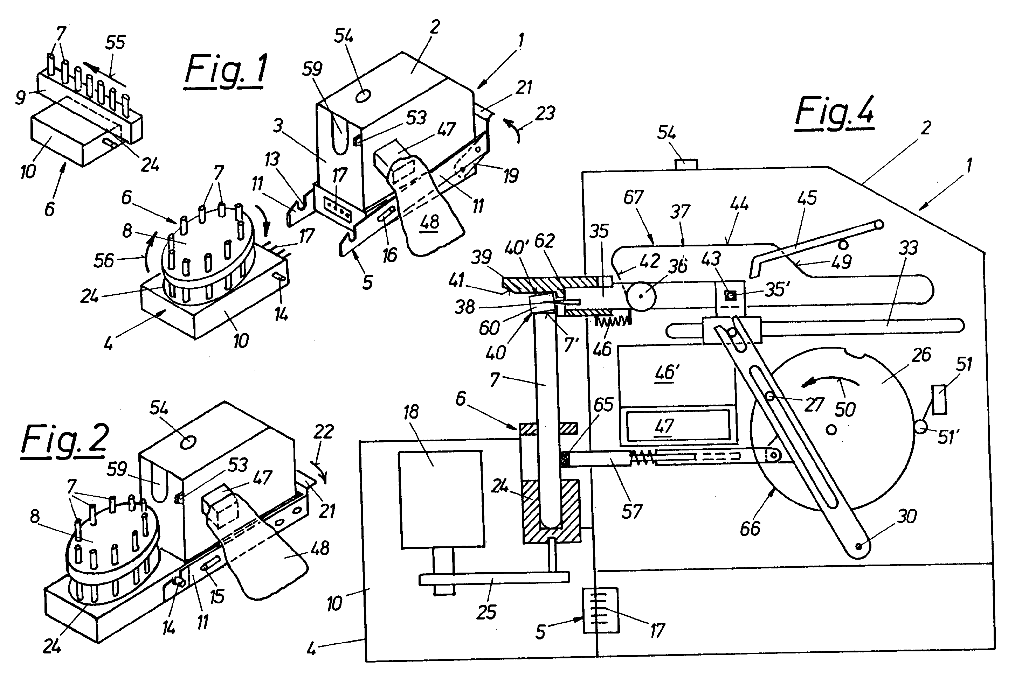

Ein Gestell 1 (Fig.1) trägt die Stopfenentfernungsvorrichtung, welche im wesentlichen von einem Gehäuse 2 umschlossen ist. Die Frontseite 3 des Gestelles 1 ist mit einem weiteren Gestell 4 mittels Verbindungsgliedern 5 kuppelbar, derart, daß beide Gestelle 1,4 aneinander spaltlos anliegen (Fig.2). Da in der Regel unterschiedliche Gefäßträger 6 für die von Glasröhrchen gebildeten Probengefäße 7 zur Anwendung kommen, sind unterschiedliche Gestelle 4 vorgesehen, entsprechend den verschiedenen Typen der Gefäßträger 6, von denen in Fig.1 der Einfachheit halber nur zwei Typen dargestellt sind, nämlich einerseits ein kreisförmiger Drehteller 8 und anderseits ein längliches Rack 9, die wahlweise an das Gestell 1 anschließbar sind. Jedes der Gestelle 4 hat ein seine Bauteile umschließendes Gehäuse 10 mit einer Aufnahme 24 für den betreffenden Gefäßträger 6.

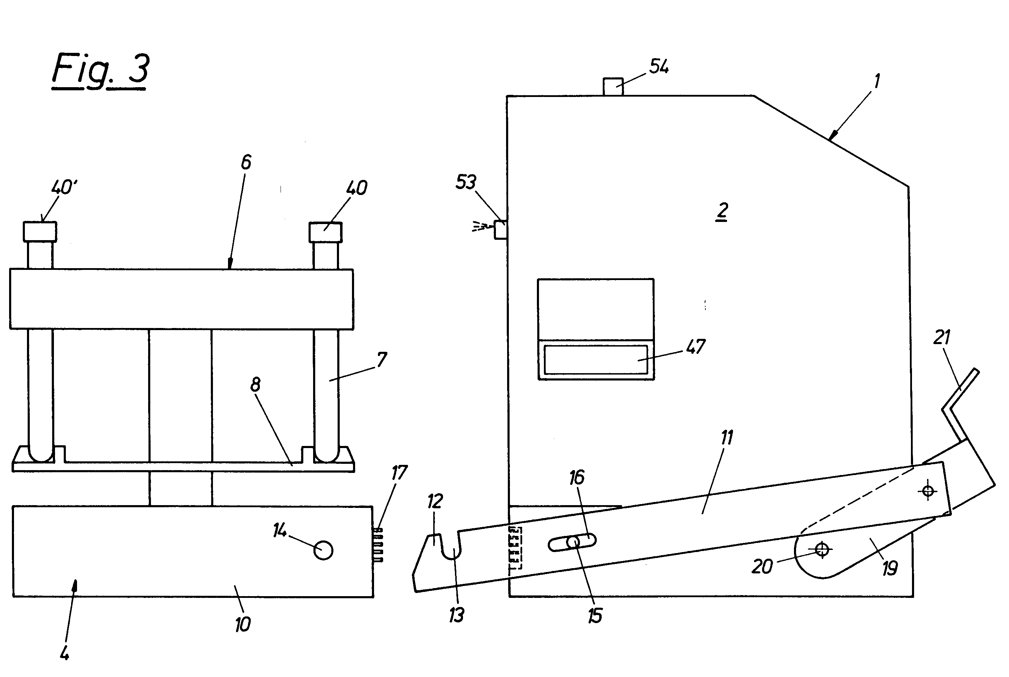

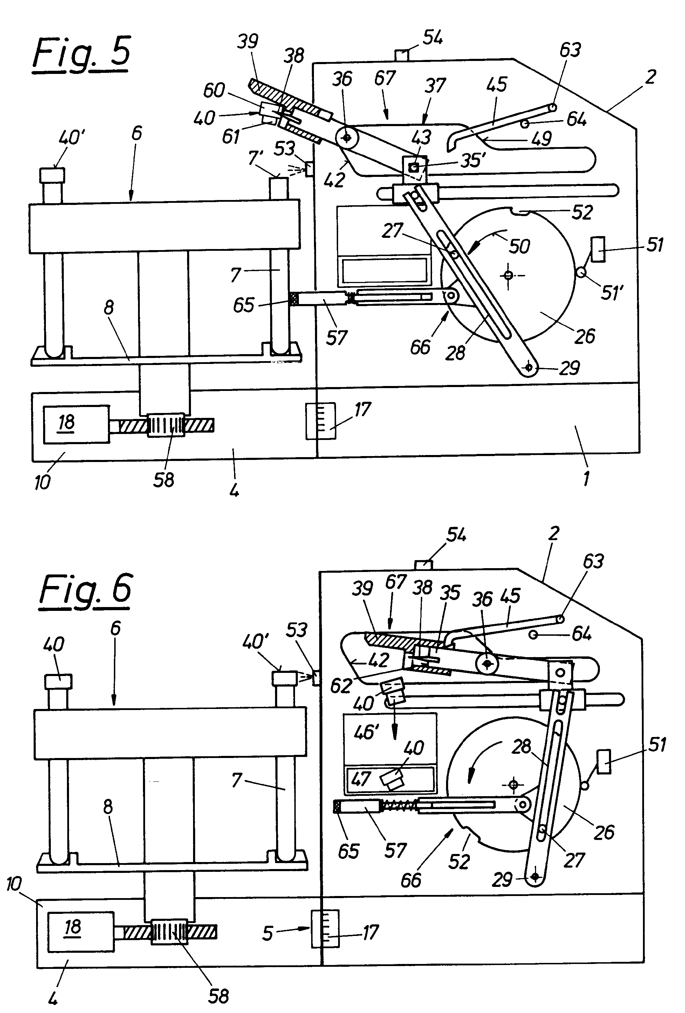

Die Verbindungsglieder 5 weisen einen Schnellverschluß auf, welcher zwei seitlich am Gehäuse 2 des Gestelles 1 geführte Bügel 11 aufweist (Fig.3), die an ihren dem Gestell 4 zugewendeten Enden mit Haken 12 ausgebildet sind, deren Öffnungen 13 nach oben gerichtet sind. In diese Öffnungen 13 rasten seitlich vom Gehäuse 10 des Gestelles 4 abstehende Bolzen 14 ein. Ferner weisen die Verbindungsglieder 5 eine elektrische Koppelung 17 in Form einer Steckverbindung auf, mit welcher das elektrische System der im Gestell 1 untergebrachten Stopfenentfernungsvorrichtung mit einem im Gestell 4 für den Gefäßträger 6 vorgesehenen eigenen Elektromotor 18 (Fig.4 bis 6) verbindbar ist. Zur Sicherung dieser Steckverbindung und zur Erleichterung des Einrastens der Bolzen 14 in die Öffnungen 13 sind die Bügel 11 mit Langlöchern 16 versehen, in denen an den Seitenflächen des Gehäuses 2 angeordnete Zapfen 15 gleiten, um welche die Bügel 11 schwenkbar sind. Jeder Bügel 11 ist an seinem der Öffnung 13 abgewendeten Ende an einem Lenker 19 angelenkt, der am Gehäuse 2 bei 20 schwenkbar gelagert ist. Die beiden seitlichen Lenker 19 sind an der Rückseite des Gehäuses 2 miteinander verbunden und mit einem Handgriff 21 zur Erleichterung der Betätigung versehen. Die Lenker 19 bilden zusammen mit den Bügeln 11 eine kniehebelartige Spannverbindung, welche nach Einhängen der Bolzen 14 in die Öffnungen 13 bei Niederdrücken des Handgriffes 21 in Richtung des Pfeiles 22 (Fig.2) die beiden einander zugewendeten Flächen der beiden Gestelle 1,4 bzw. deren Gehäuse 2,10 in enge Anlage aneinander bringt und derart die Steckverbindung der Koppelung 17 in der eingesteckten Lage sichert. Bei Hochschwenken des Handgriffes 21 in Richtung des Pfeiles 23 (Fig.1) wird diese Spannverbindung rasch gelöst, so daß die Stecker der Steckverbindung 17 aus den zugehörigen Buchsen herausgezogen und die Bolzen 14 aus den Öffnungen 13 ausgehoben werden können, so daß das Gestell 4 vom Gestell 1 getrennt wird und gegen ein anderes Gestell 4 ausgetauscht werden kann. Dadurch ist ein problemloser Übergang von einer Gefäßträgertype auf eine andere Type möglich.

Der in jedem Gestell 4 bzw. im Gehäuse 10 angeordnete Motor 18 transportiert den in der dem jeweiligen Gefäßträger 6 angepaßten Aufnahme geführten Gefäßträger 6 schrittweise, so daß die vom Gefäßträger 6 gehaltenen Probengefäße 7 der Reihe nach von ihren Verschlußstopfen 40 befreit werden können (Fig.4 bis 6). Bei als Drehteller 8 ausgebildeten Gefäßträgern 6 ist die schrittweise Bewegung leicht durch eine entsprechende Ansteuerung des Elektromotors 18 durchführbar, wobei lediglich die Erreichung der gewünschten Position durch geeignete Mittel gesichert werden muß. Bei als Rack 9 ausgebildeten Gefäßträgern 6 (Fig.4) ist ein in die Aufnahme 24 eingreifendes Schrittschaltwerk 25 erforderlich, um den Gefäßträger 6 in seiner Aufnahme 24 in Richtung des Pfeiles 55 (Fig.1) zu transportieren. Ein solches Schrittschaltwerk kann jedoch, falls gewünscht, auch für die Drehbewegung des Drehtellers 8 in Richtung des Pfeiles 56 (Fig.1) verwendet werden.

Die im Gehäuse 2 des Gestelles 1 untergebrachte Stopfenentfernungsvorrichtung hat einen Antrieb 66 mit einem nicht dargestellten Elektromotor, der vom elektrischen System der vom Gestell 1 getragenen Stopfenentfernungsvorrichtung gespeist wird und eine Antriebs- und Steuerscheibe 26 antreibt (Fig.4), die einen Exzenterzapfen 27 trägt, der in einem Längsschlitz 28 eines Schwenkhebels 29 gleitet, der bei 30 im Gestell 1 schwenkbar gelagert ist. An seinem freien Ende ist dieser Schwenkhebel 29 gegabelt ausgebildet und treibt einen Zapfen 31 eines Gleitstückes 32, das in einem horizontalen Schlitz 33 verschiebbar gelagert ist. Das Gleitstück 32 trägt einen nach oben weisenden Fortsatz 34, an welchem eine Stange 35 um eine horizontale Achse 35′ schwenkbar angelenkt ist, welche Stange etwa in der Mitte ihrer Länge mittels einer Führungsrolle 36 an einer Kulisse 37 einer Führung 67 geführt ist. Die Stange 35 ist somit in horizontaler Richtung hin und her verschiebbar, zusätzlich um die Achse 35′ schwenkbar und kann mit ihrem vorderen Ende durch eine Öffnung 59 aus dem Gehäuse 2 herausgeschoben, jedoch auch zur Gänze in das Gehäuse 2 zurückgezogen werden. Dieses vordere Ende der Stange 35 trägt einen Dorn 38, der von einer Gabel eines Abstreifers 39 umgeben ist, der bei der Vorschubbewegung der Stange 35 auf die Deckfläche des Verschlußstopfens 40 aufgleitet. Um dies auch für unterschiedliche Höhen der Probengefäße 7 zu ermöglichen, ist der Abstreifer 39 an seiner Vorderkante mit einer Abschrägung 41 versehen. Dadurch wird auf einfache Weise gesichert, daß der Dorn 38 bei der Vorschubbewegung der Stange 35 stets etwa mittig auf den Verschlußstopfen 40 trifft und in den Verschlußstopfen 40 eindringt (Fig. 4). Durch das Auftreffen des Dornes 38 auf den Verschlußstopfen 40 und durch den beim Eindringen des Dornes 38 ausgeübten Widerstand, jedoch auch schon beim Aufgleiten der Abschrägung 41 auf den Verschlußstopfen 40, wird letzterer, vorwiegend durch Verformung seines plastischen Materiales (Gummi, Kunststoff, Kork od.dgl.) mehr oder weniger so verformt, daß seine Deckfläche 40′ schräg steht, wobei ihr dem Gehäuse 2 benachbarter Rand höher liegt als der weiter vom Gehäuse 2 entfernte Rand. Diese Verformung bzw. Schrägstellung des Verschlußstopfens 40 ist in Fig.4 der Deutlichkeit halber übertrieben dargestellt.

Im Anschluß an das Eindringen des Dornes 38 in den Verschlußstopfen 40 gleitet die Führungsrolle 36 an einem ansteigenden Abschnitt 42 der Kulisse 37 hoch, wodurch der Stopfen 40 aus dem Probengefäß 7 herausgezogen wird (Fig.5). Die erwähnte Schrägstellung bzw. Verformung des Verschlußstopfens 40 bewirkt hiebei, daß der dem Gehäuse 2 benachbarte untere Rand des Verschlußstopfens 40 zuerst aus dem Oberrand 7′ des Probengefäßes 7 austritt. Sollte es hiebei - aus was für Gründen auch immer - zu einem Austritt von Probengut aus dem Probengefäß 7 kommen, so spritzt dieses Probengut gegen das Gehäuse 2 zu und nicht auf die benachbarten Probengefäße 7.

Die erwähnte Schrägstellung des Verschlußstopfens 40 ist auch in Fig.5 (übertrieben) dargestellt, die Verschwenkung der Stange 35 um die Achse 35′ bewirkt natürlich gegen Ende des ansteigenden Kulissenabschnittes 42, daß der Verschlußstopfen 40 schräg liegt, wobei seine vom Gehäuse 2 weiter entfernte Seite höher liegt. Zu diesem Zeitpunkt hat aber der Verschlußstopfen 40 das Probengefäß 7 längst verlassen. Der kritische Moment ist lediglich jener, in welchem sich der Verschlußstopfen 40 vom Probengefäß 7 zu lösen beginnt. In der Regel hat der Verschlußstopfen 40 einen verbreiterten Kopf 60, welcher in der Verschlußstellung des Stopfens 40 am Oberrand 7′ des Probengefäßes 7 aufliegt, und einen an den Kopf 60 nach unten anschließenden eigentlichen Verschlußabschnitt 61, der in der Regel zylindrisch ausgebildet ist und in der Verschlußstellung dichtend im obersten Abschnitt des Glasröhrchens des Probengefäßes 7 sitzt. Eine solche Form des Verschlußstopfens ist in den Zeichnungen dargestellt, jedoch können selbstverständlich auch davon abweichende Verschlußstopfenformen mit der Vorrichtung behandelt werden, etwa rein zylindrische oder kegelstumpfförmige Verschlußstopfen. Der Verschlußstopfen 40 kann, doch muß nicht, durchgehende Öffnungen aufweisen, z.B. zum Ansatz eines Ausgußröhrchens, einer Diluterleitung usw.

Sobald die hochgeschwenkte Stellung der Stange 35 (Fig.5) erreicht ist, rastet eine Arretierung 43 (Fig.4) an der Schwenklagerung der Stange 35 am Fortsatz 34 ein und hält dadurch die Stange 35 in der hochgeschwenkten Stellung, solange die Führungsrolle 36 entlang eines an den ansteigenden Führungsabschnitt 42 anschließenden horizontalen Abschnittes 44 der Kulisse 37 gleitet, wobei die Stange 35 samt dem Dorn 38 und dem daran haftenden Verschlußstopfen 40 in das Innere des Gehäuses 2 zurückgezogen wird. Diese Arretierung 43 kann z.B. eine Kugelrast sein. Bei Erreichen des rechten Endes des Abschnittes 44 kommt ein ortsfester Anschlag 45 zur Anlage am Hinterende des Abstreifers 39 (Fig.6), wodurch der Abstreifer 39 entgegen der Wirkung einer Feder 46 (Fig.4) relativ zur Stange 35 gegen die Spitze des Dornes 38 zu bewegt wird und dadurch den Verschlußstopfen 40 vom Dorn 38 abzieht. Dies geschieht innerhalb des Gehäuses 2, wobei die gesamte Stange 35 samt dem an ihr geführten Abstreifer 39 innerhalb des Gehäuses 2 liegt, so daß Sicherheit dafür gegeben ist, daß der gelöste Verschlußstopfen 40 in einen Auffangtrichter 46′ fällt, welcher zu einem Abfuhrschacht 47 führt, der aus dem Gehäuse 2 herausgeführt ist und außerhalb des Gehäuses 4 einen an ihm befestigten Sammelbeutel 48, vorzugsweise einen Müllbeutel mit Schnurzug, zur Aufnahme der gesammelten Verschlußstopfen 40 trägt. Dies ergibt eine hygienische Sammelung der Verschlußstopfen.

Im Anschluß an den horizontalen Abschnitt 44 der Kulisse 37 ist ein abfallender Abschnitt 49 vorgesehen, durch welchen die Stange 35 wieder in die horizontale Lage zurückgedrückt wird, wobei die Arretierung 43 ausgerückt wird. Nach Erreichung der hinteren Totpunktlage der Stange 35 beginnt wieder deren Vorschubbewegung und die Vorgänge wiederholen sich. Die Rückführung des Abstreifers 39 erfolgt durch die Feder 46 bis zu einem von einer Absetzung 62 der Stange 35 gebildeten Anschlag (Fig.4).

Die erwähnte Hin- und Herbewegung sowie Verschwenkung der Stange 35 erfolgt so lange, als sich die Scheibe 26 in Richtung des Pfeiles 50 dreht. Dies ist der Fall, so lange ein Stoppschalter 51 (Fig.4) die Drehung der Scheibe 26 nicht unterbricht, welche Unterbrechung durch Einrasten eines Schalterteiles 51 in eine Rast 52 am Umfang der Scheibe 26 erfolgt, so daß die Scheibe blockiert wird. Dies geschieht, sobald ein Sensor 53, zweckmäßig ein Infrarotsensor, der an der Frontseite 3 des Gehäuses 2 angeordnet ist, feststellt, daß sich vor jener Öffnung 59 der Frontseite 3, durch welche die Stange 35 mit dem Dorn 38 aus dem Gehäuse 2 austritt, kein Probengefäß 7 oder ein solches ohne Verschlußstopfen 40 befindet.

Zweckmäßig ist der Anschlag 45 um eine horizontale Achse 63 schwenkbar im Gehäuse 2 gelagert und durch einen Bolzen 64 am Absenken gehindert. Auf diese Weise kann der Anschlag 45 seine Aufgabe auch bei unterschiedlichen Schwenkstellungen der Stange 35 am besten erfüllen (Fig. 6).

Das Gehäuse 2 trägt an, seiner Deckwand eine als Leuchtdrucktaste ausgebildete Starttaste 54.

Um das beim Einstechen des Dornes 38 in den Verschlußstopfen 40 entstehende Kippmoment auf das Probengefäßes 7 aufzunehmen und damit eine Schrägstellung des Probengefäßes 7 zu verhindern, ist ein gefederter Andruckbolzen 57 (Fig.4) vorgesehen, der am Schwenkhebel 29 angelenkt ist und somit ebenfalls von der Scheibe 26 betätigt wird. Dieser Andruckbolzen 57 trägt an seinem freien Ende zweckmäßig ein Polster 65 und kommt dadurch sanft bei seiner Vorschubbewegung im unteren Abschnitt des Probengefäßes 7 zur Anlage und hält das Röhrchen während des gesamten Stropfenentfernungsprozesses fest.

Die beschriebene modulartige Andockung unterschiedlicher Gestelle 4 für unterschiedliche Gefäßträger 6 beinhaltet für alle Gestelle 4 eine gleiche Ausbildung der Bolzen 14 und eine gleiche Anordnung der elektrischen Koppelung 17. Durch Mehrfachstecker dieser Koppelung 17, welche unterschiedliche Stifte tragen, die in die ihnen zugeordneten Buchsen des Gestelles 1 eingeführt werden, läßt sich jedoch die elektrische Verbindung leicht an die jeweils vorliegende Gefäßträgertype anpassen.

Für die Drehbewegung der Drehteller 8 in Richtung des Pfeiles 56 (Fig.1) dient zweckmäßig ein Schneckengetriebe 58 (Fig.5), dem ein Schrittschaltwerk 25 (Fig.4) zugeordnet sein kann.

## Patentansprüche

1. Vorrichtung zur automatischen Entfernung des Verschlußstopfens von Gefäßen, insbesondere von Probengefäßen für medizinische oder technische Tests, welche Gefäße vorzugsweise zu mehreren, in Gefäßträgern angeordnet sind und nacheinander vom Verschlußstopfen befreit werden, wobei ein in den Verschlußstopfen einstechender Dorn mittels eines im Gestell der Vorrichtung befindlichen Antriebes auf den Verschlußstopfen zu bewegt, anschließend der Verschlußstopfen mittels des Dornes vom Gefäß gelöst und schließlich vom Dorn abgestreift wird, und wobei im Gestell eine Führung zur Bewegung einer den Dorn tragenden Stange vorgesehen ist, dadurch gekennzeichnet, daß der Dorn (38) am einen Stirnende der Stange (35) mit vom anderen Stirnende der Stange (35) weg gerichteter Spitze befestigt ist und daß der Antrieb (66) und die Führung (67) die Stange (35) beim Einstechen vom Gestell (1) der Vorrichtung weg auf den Verschlußstopfen (40) zu bewegen, so daß der Dorn (35) in den Verschlußstopfen (40) von der Seite des Gestelles (1) her einsticht.

2. Vorrichtung nach Anspruch 1, dadurch gekennzeichnet, daß die Stange (35) an einer im Gestell (1) vorgesehenen Kulisse (37) der Führung (67) geführt und mit ihrem den Dorn (38) tragenden Stirnende aus dem Gestell (1) durch den Antrieb (66) gegen den Gefäßträger (6) zu herausbewegbar ist.

3. Vorrichtung nach Anspruch 2, dadurch gekennzeichnet, daß an dem den Dorn (38) tragenden Stirnende der Stange (35) ein Abstreifer (39) für das Abziehen des Verschlußstopfens (40) vom Dorn (38) längsverschieblich gelagert ist, welcher beim Abstreifvorgang, vorzugsweise entgegen der Wirkung einer Feder (46), relativ zur Stange (35) durch einen ortsfesten Anschlag (45) vom Stirnende der Stange (35) weg zur Spitze des Dornes (38) zu verschoben wird.

4. Vorrichtung nach Anspruch 3, dadurch gekennzeichnet, daß der Abstreifer (39) eine über den Dorn (38) vorragende Verlängerung trägt, welche beim Einstechvorgang mit einer stirnseitigen Abschrägung (41) auf die Deckfläche (40′) des Verschlußstopfens (40) aufgleitet.

5. Vorrichtung nach einem der Ansprüche 2 bis 4, dadurch gekennzeichnet, daß die Kulisse (37), an welcher die Stange (35) mit zumindest einer Rolle (36) geführt ist, im Anschluß an jene Stelle, an welcher die Rolle (36) beim Einstechen des Dornes (38) liegt, einen schräg nach oben gegen den Gefäßträger (6) zu gerichteten Führungsabschnitt (42) aufweist, wobei die Stange (35) mit ihrem Antrieb (66) über ein Gelenk mit horizontaler Achse (35′) verbunden ist.

6. Vorrichtung nach Anspruch 5, dadurch gekennzeichnet, daß das Gelenk mit einer Arretierung (43) versehen ist, welche die Stange (35) bei der Rückzugbewegung an einem oberen, an den geneigten Führungsabschnitt (42) anschließenden Führungsabschnitt (44) der Kulisse (37) in Anlage hält.

7. Vorrichtung nach Anspruch 6, dadurch gekennzeichnet, daß der, vorzugsweise schwenkbar gelagerte, Anschlag (45) für den Abstreifer (39) im Bereich des vom Gefäßträger (6) entfernten Endes des oberen Führungsabschnittes (44) vorgesehen ist, wobei die Abstreifstelle im Gestell (1) liegt.

8. Vorrichtung nach Anspruch 6 oder 7, dadurch gekennzeichnet, daß im Anschluß an die Stelle der Führung (67), an welcher der Anschlag (45) für den Abstreifer (39) zur Wirkung kommt, ein abfallender Führungsabschnitt (49) vorgesehen ist, welcher die Arretierung (43) des Gelenkes der Stange (35) löst.

9. Vorrichtung nach einem der Ansprüche 1 bis 8, dadurch gekennzeichnet, daß an einer dem Dorn (38) benachbarten Stelle des Gestelles (1) an der dem Gefäßträger (6) zugewendeten Seite desselben ein Sensor (53) für das Vorhandensein eines Verschlußstopfens (40), vorzugsweise ein Infrarotsensor, vorgesehen ist, der mit der elektrischen Anspeisung des Antriebes des Dornes (38), vorzugsweise mit einem Stoppschalter (51), gekoppelt ist.

## Claims

1. A device for the automatic removal of the stopper from receptacles, in particular from sample receptacles for medical or industrial tests, which receptacles - preferably a plurality thereof - are arranged in receptacle bearers and are consecutively freed of their respective stoppers, a spike which sticks into the stopper being moved towards the stopper by means of a drive located in the frame of the device, then the stopper being removed from the receptacle by means of the spike and finally being stripped from the spike, and a guiding means for moving a bar bearing the spike being provided in the frame, characterised in that the spike (38) is secured to one end face of the bar (35) in such a manner that its point is directed away from the other end face of the bar (35), and in that the drive (66) and the guiding means (67) move the bar (35) away from the frame (1) of the device towards the stopper (40) upon piercing of the latter, so that the spike (35) sticks into the stopper (40) from the side nearest the frame (1).

2. A device in accordance with Claim 1, characterised in that the bar (35) is guided on a link (37) - provided in the frame (1) - of the guiding means (67) and its end face bearing the spike (38) is movable out of the frame (1) and towards the receptacle bearer (6) by means of the drive (66).

3. A device in accordance with Claim 2, characterised in that a stripper (39) for taking the stopper (40) off the spike (38) is mounted in a longitudinally displaceable manner on the bar end-face bearing the spike (38), which stripper (39) is during the stripping process displaced relative to the bar (35) - by means of a fixed stop (45) and preferably against the action of a spring (46) - away from the end face of the bar (35) and towards the point of the spike (38).

4. A device in accordance with Claim 3, characterised in that the stripper (39) has a prolongation which projects beyond the spike (38) and during piercing of the stopper with the latter links onto the upper surface (40′) of the stopper (40) by means of a frontal chamfer (41).

5. A device in accordance with any one of Claims 2 to 4, characterised in that the link (37) on which the bar (35) is guided by means of at least one roller (36), has - adjacent to that site at which the roller (36) lies upon piercing of the stopper by the spike (38) - a guiding portion (42) which is inclined upwards towards the receptacle bearer (6), the bar (35) being connected to its drive (66) via a linkage with a horizontal axis (35′).

6. A device in accordance with Claim 5, characterised in that the linkage is provided with a locking device (43) which during return motion keeps the bar (35) in contact with an upper guiding portion (44) of the link (37), which guiding portion (44) is adjacent to the inclined guiding portion (42).

7. A device in accordance with Claim 6, characterised in that the stop (45), which is preferably pivotably mounted, for the stripper (39) is provided in the region of the end of the upper guiding portion (44) which is remote from the receptacle bearer (6), the stripping site lying within the frame (1).

8. A device in accordance with Claim 6 or 7, characterised in that a sloping guiding portion (49) is provided adjacent to the guiding means (67) site at which the stop (45) for the stripper (39) comes into effect, this guiding portion (49) disengaging the locking device (43) of the linkage of the bar (35).

9. A device in accordance with any one of Claims 1 to 8, characterised in that at a site of the frame (1) which is adjoining the spike (38), at the side of the frame (1) facing the receptacle bearer (6), there is provided a sensor (53) for the presence of a stopper (40), preferably an infrared sensor, which is coupled to the electric supply of the drive of the spike (38), preferably to a stop switch (51).

## Revendications

1. Dispositif pour l'élimination automatique du bouchon de fermeture de flacons à échantillon, en particulier de flacons à échantillon pour tests médicaux ou techniques, flacons qui sont disposés, de préférence à plusieurs, dans des porte-flacons et sont libérés successivement de leur bouchon, un mandrin pénétrant dans le bouchon étant déplacé en direction de celui-ci au moyen d'un moteur se trouvant à l'intérieur du châssis du dispositif, le bouchon étant ensuite dégagé du flacon au moyen de ce mandrin et enfin éliminé par raclage dudit mandrin, tandis que, dans le châssis, est prévu un guidage pour le déplacement d'une tige supportant le mandrin, caractérisé en ce que le mandrin (38) est fixé sur une extrémité frontale de la tige (35), sa pointe étant opposée à l'autre extrémité frontale de ladite tige (35) et en ce que, pendant l'opération de pénétration, le moteur (66) et le guidage (67) déplacent la tige (35) vers le bouchon (40) en l'éloignant du châssis (1) du dispositif, de telle sorte que le mandrin (35) pénètre dans le bouchon (40) par le côté du châssis (1).

2. Dispositif selon la revendication 1, caractérisé en ce que la tige (35) est guidée sur une coulisse (37) du guidage (67) prévue dans le châssis (1) et peut être sortie par son extrémité frontale supportant le mandrin (38) du châssis (1), au moyen du moteur (66), en direction du porte-flacons (6).

3. Dispositif selon la revendication 2, caractérisé en ce que sur l'extrémité frontale de la tige (35) supportant le mandrin (38) est monté, de manière mobile dans le sens longitudinale, un racleur (39) pour le retrait du bouchon (40) du mandrin (38), ce racleur, par rapport à la tige (35) s'éloignant de l'extrémité frontale de cette tige (35) vers la pointe du mandrin (38) en raison de la présence d'une butée fixe (45), de préférence en s'opposant à l'effet d'un ressort (46).

4. Dispositif selon la revendication 3, caractérisé en ce que le racleur (39) supporte un prolongement faisant saillie du mandrin (38), ce prolongement glissant avec une partie biseautée (41) présente du côté frontal, lors de l'opération de pénétration, sur la face supérieure (40′) du bouchon (40)

5. Dispositif selon l'une des revendications 2 à 4, caractérisé en ce que la coulisse (37) le long de laquelle la tige (35) est guidée par au moins un galet (36), présente, à l'emplacement qui fait suite à celui où se situe le galet (36) lors de la pénétration du mandrin (38), une section de guidage (42) orientée de manière oblique vers le haut en direction du porte-flacons (6), tandis que ladite tige (35) est reliée à son moteur (66) par une articulation à axe horizontal (35′)

6. Dispositif selon la revendication 5, caractérisé en ce que l'articulation est munie d'une butée d'arrêt (43) laquelle maintient la tige (35), lors du mouvement de retrait, appliquée contre une section supérieure de guidage (44), de la coulisse (37), faisant suite à la section de guidage inclinée (42).

7. Dispositif selon la revendication 6, caractérisé en ce que la butée (45), de préférence montée de manière orientable, du racleur (39) est prévue au voisinage de l'extrémité opposée au porte-flacons (6) de la section de guidage (44), le point de raclage étant situé dans le châssis.

8. Dispositif selon la revendication 6 ou 7, caractérisé en ce que, faisant suite au point du guidage (67) où prend effet la butée (47) du racleur (39), est prévue une section de guidage descendante (49) qui débloque la butée d'arrêt (43) de l'articulation de la tige (35).

9. Dispositif selon l'une des revendications 1 à 8, caractérisé en ce qu'en un point du châssis (1) placé au voisinage du mandrin (38), sur le côté de ce châssis orienté vers le porte-flacons (6), est prévu un capteur (53) détectant la présence d'un bouchon (40) de préférence un capteur infrarouge, lequel est couplé à l'alimentation électrique du moteur du mandrin (38), cette alimentation étant, de préférence, munie d'un interrupteur d'arrêt (51).
